# EUROPEAN PATENT APPLICATION

(11) **EP 2 113 925 A2**
(43) Date of publication of application: **04.11.2009**
(21) Application number: 09158399.7
(22) Date of filing: 21.04.2009
(51) Int. Cl.: G21C 15/16

(54) **Steam dryer**

(30) Priority: 30.04.2008 US 112735
(71) Applicant: GE-Hitachi Nuclear Energy Americas LLC, Wilmington, NC 28401 (US)
(72) Inventor: Defilippis, Michael S., Wilmington, NC 28411 (US); Ewida, Khaled, Wilmington, NC 28411 (US)
(74) Representative: Gray, Thomas

(57) **Abstract**

A steam dryer (2) includes a plurality of steam dryer banks (6). Each steam dryer bank includes a hood (16), separator vanes (18), and a perforated plate (14) connected to the hood (16) to define a volume configured to receive a flow of steam. Each dryer bank forms a closed loop.

## Description

### FIELD OF THE INVENTION

The present invention relates generally to nuclear reactors and, more particularly, to the steam dryers in a nuclear reactor pressure vessel.

### BACKGROUND OF THE INVENTION

A reactor pressure vessel (RPV) of a boiling water reactor (BWR) has a generally cylindrical shape and is closed at both ends, e.g., by a bottom head and a removable top head. A top guide is spaced above a core plate within the RPV. A core shroud surrounds the core and is supported by a shroud support structure. The shroud has a generally cylindrical shape and surrounds both the core plate and the top guide. There is a space or annulus located between the cylindrical reactor pressure vessel and the cylindrically shaped shroud.

Heat is generated within the core and water circulated up through the core is at least partially converted to steam. Steam separators separate the steam and the water. Residual water is removed from the steam by steam dryers located above the core. The de-watered steam exits the RPV through steam outlets near the vessel top head.

Current steam dryers may include a bank of dryer vanes. One current steam dryer comprises corrugated plates aligned in parallel to form steam passages. A perforated plate is provided adjacent to the plurality of corrugated plates. A hood is provided over the perforated plate and the plurality of corrugated plates. See, for example, U.S. Patent 6,980,621.

Another current steam dryer comprises a plurality of dryer vanes. Dryer hoods cover the dryer vanes and form discharge plena. Flow control apparatus are positioned in the discharge plena. The flow control apparatus comprise elongated, perforated plate members to level the steam flow. Each elongated, perforated plate member is coupled to a support member which is coupled to a positioning member. See, for example, U.S. Patent 6,810,837.

The flow of steam through the dryers can be unbalanced or mismatched, with much of the steam flow preferentially passing through the top of the dryer vanes. At increased power levels of the reactor, increased steam flow may cause the steam velocity to exceed the breakthrough velocity in local regions of the dryer vanes. The dryer ceases to remove moisture droplets from the steam in those areas where the breakthrough velocity has been exceeded. Wet steam that breaks through, or exits the dryer, then can cause undesirable effects in the rest of the power plant. In addition to the potential for erosion of the metal components, the excess moisture can transport activated particulates from the reactor to the pipes, turbines and heat exchangers which are downstream of the separator which can increase the dose rate in the turbine hall, and make equipment maintenance more difficult.

Current steam dryers have low natural frequency that tends to coincide with excitation sources in the system. This causes excitation of the bank of vanes that in turn creates high stress areas and cracks. Current straight bank designs have added gussets and tie bars in an effort to increase the resonance frequency of the banks to attempt to reduce crack propagation.

### BRIEF DESCRIPTION OF THE INVENTION

One embodiment comprises a steam dryer. The steam dryer comprises at least one steam dryer bank, each steam dryer bank comprising a hood and a perforated plate connected to the hood to define a volume configured to receive a flow of steam, wherein each dryer bank comprises a closed loop.

### BRIEF DESCRIPTION OF THE DRAWINGS

There follows a detailed description of embodiments of the invention by way of example only with reference to the accompanying drawings, in which:
FIGURE 1 is a schematic perspective view of a steam dryer according to an embodiment;
FIGURE 2 is a schematic perspective section view of the steam dryer of FIGURE 1;
FIGURE 3 is a schematic perspective view of a steam dryer according to another embodiment;
FIGURE 4 is a schematic perspective section view of the steam dryer of FIGURE 3;
FIGURE 5 is a schematic perspective view of a steam dryer according to another embodiment;
FIGURE 6 is a schematic perspective view of a steam dryer according to another embodiment; and
FIGURE 7 is a schematic perspective view of a steam dryer according to another embodiment.

### DETAILED DESCRIPTION OF THE INVENTION

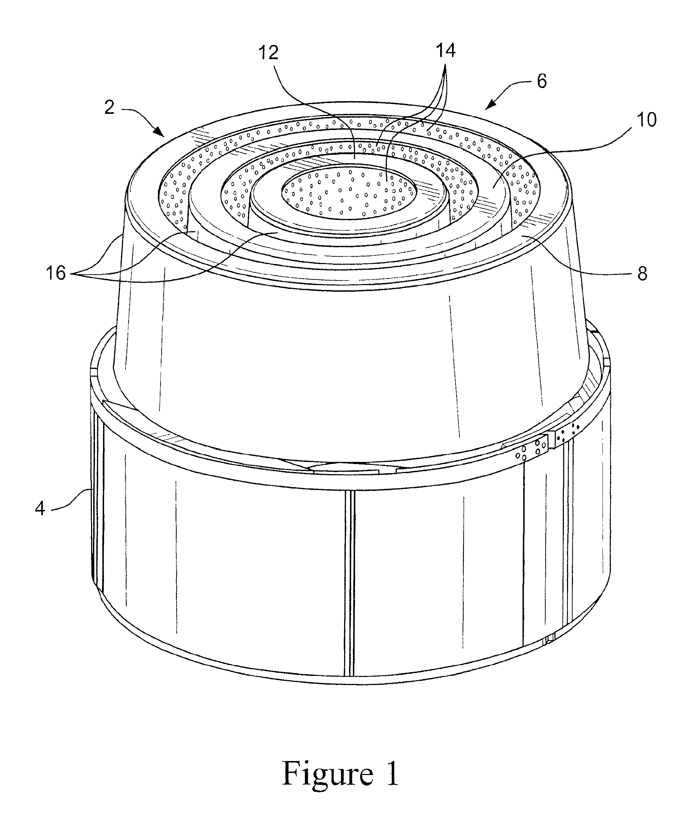

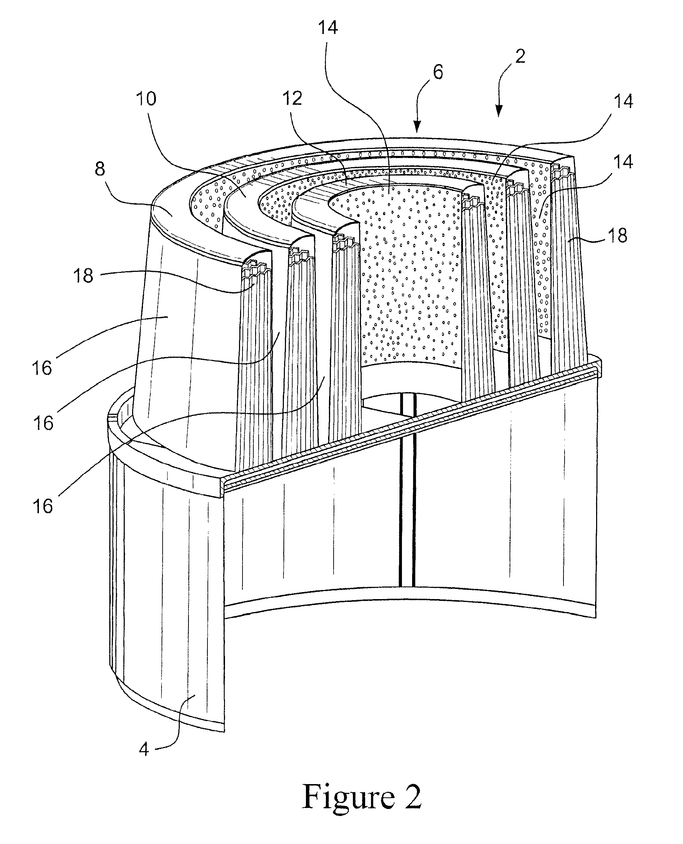

Referring to FIGURES 1 and 2, a steam dryer 2 according to one embodiment of the invention is illustrated. The steam dryer skirt 4 may have a generally cylindrical cross section. A steam separator (not shown) may be provided in the reactor pressure vessel (not shown) below the steam dryer to separate water from steam.

The steam dryer 2 comprises a plurality of dryer banks 6. For example, the plurality of dryer banks 6 comprises an outer dryer bank 8, an intermediate dryer bank 10, and an inner dryer bank 12. As shown in FIGURE 2, each dryer bank 8, 10, 12 may comprise a perforated plate 14 and a hood 16 connected to the perforated plate 14 and separating vanes 18 housed between the hood 16 and the perforated plate 14. The perforated plate 14 and the hood 16 define an enclosure into which steam flows, for example from the steam separator.

Although the steam dryer 2 is shown as including a plurality of steam dryer banks, it should be appreciated that the steam dryer may include any number of dryer banks, for example one dryer bank, or two dryer banks, or three, or more, dryer banks.

The hoods 16 are imperforate and the steam is directed through the separating vanes 18 to the perforated plate 14. The separating vanes 18 remove residual water from the steam. The steam passing through the perforated plate 14 is then fed out of outlets in the reactor pressure vessel to drive a turbine.

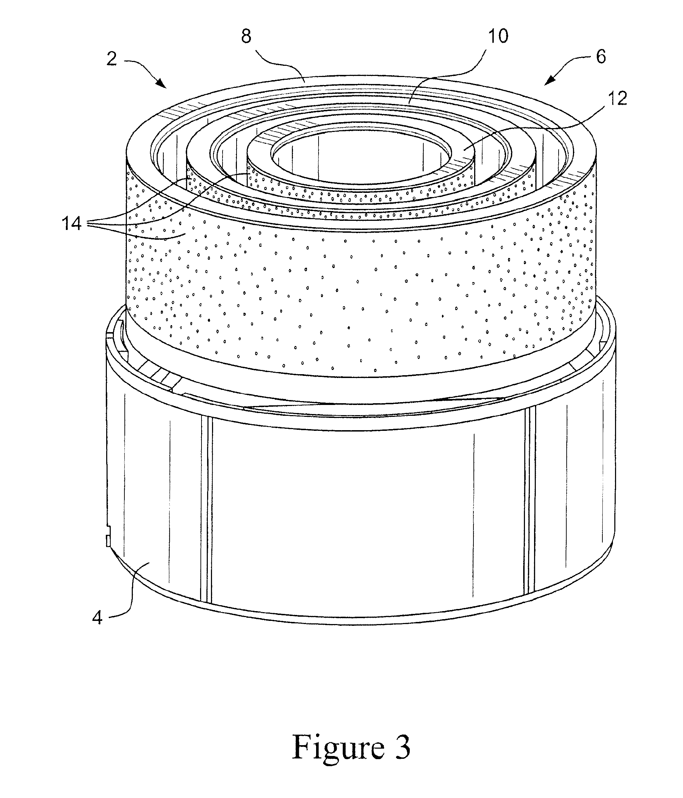

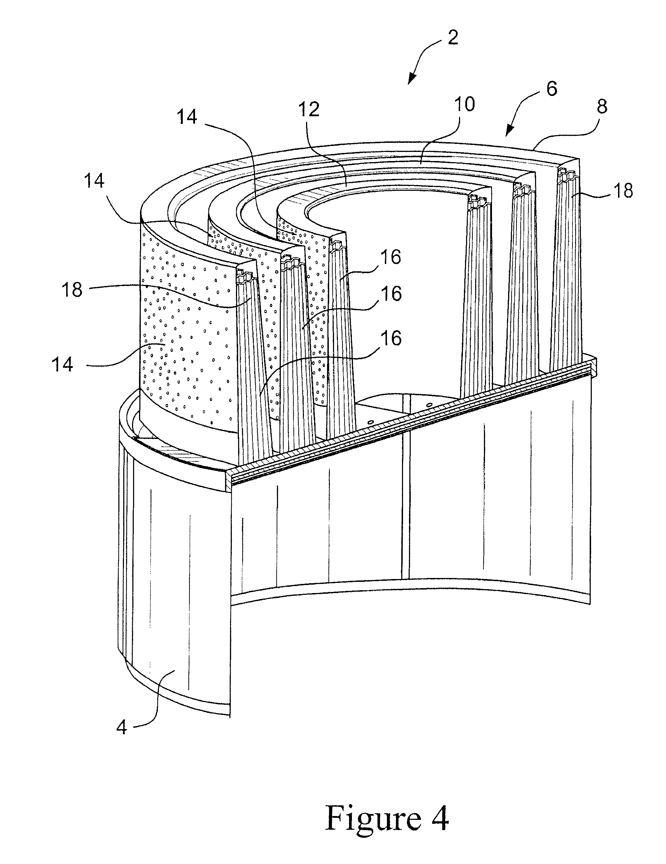

As shown in FIGURES 1 and 2, the perforated plates 14 are provided on radially inward facing portions of the dryer banks 8, 10, 12. According to another embodiment shown in FIGURES 3 and 4, the perforated plates 14 may be provided on radially outward facing portions of the dryer banks 8, 10, 12.

Although the dryer banks 8, 10, 12 are shown as generally circular, it should be appreciated that the dryer banks may be any closed looped shape. For example, the dryer banks may be oval, elliptical, or polygonal, such as pentagonal, hexagonal, octagonal, etc. It should also be appreciated that although the dryer skirt 4 is shown as generally circular in cross section, the dryer skirt 4 may also be oval, elliptical, or polygonal.

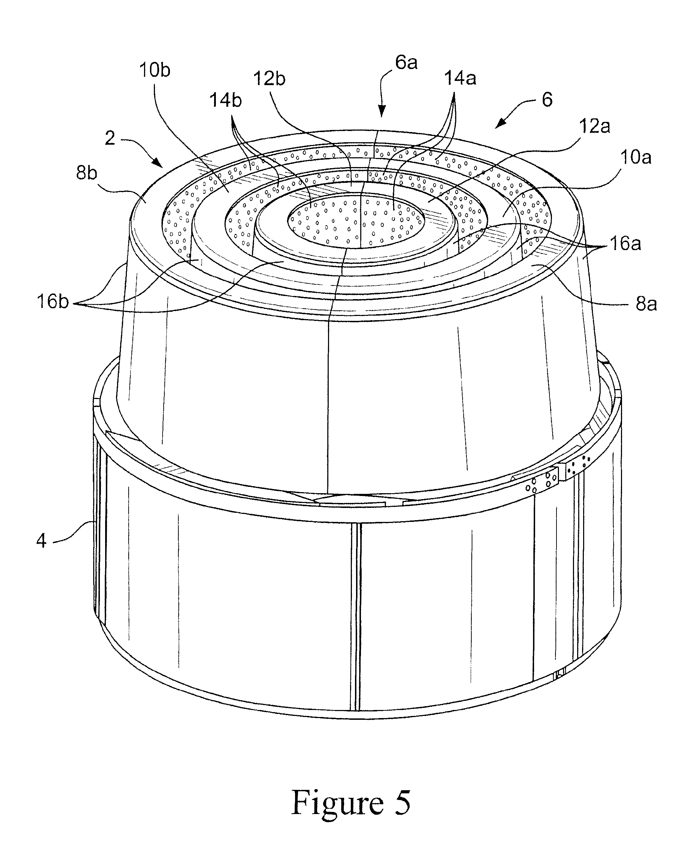

Referring to FIGURE 5, the dryer banks 6a may be formed as sections 8a, 8b; 10a, 10b, 12a, 12b. Each section may be, for example, semi-circular. Each section may also include a perforated plate 14a, 14b and a hood 16a, 16b.

It should be appreciated that the sections may be other than semi-circular. For example, each dryer bank may be formed of any number of plural sections. The dryer banks 6a may also be non-circular, e.g. oval, elliptical or polygonal, and formed of any number of plural sections. It should also be appreciated that the sections may be connected so that some, or all, of the dryer banks do not form loops. For example, the sections may be connected so that steam may not flow between or amongst sections, or the sections may not connect to each other.

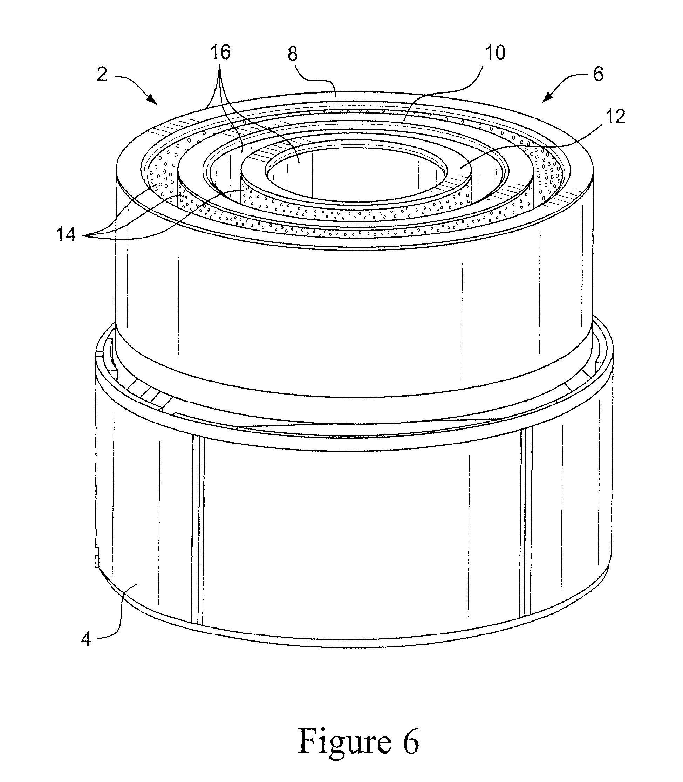

Referring to FIGURE 6, the dryer banks 6 may include both radially inward and outward facing perforated plates 14. The dryer banks 6 may also include radially inward and radially outward facing hoods 16. For example, as shown in FIGURE 6, intermediate dryer bank 10 and inner dryer bank 12 may have radially outward facing perforated plates 14 and outer dryer bank 8 may have a radially inward facing perforated plate 14. Similarly, the intermediate dryer bank 10 and the inner dryer bank 12 may have radially inward facing hoods 16 and outer dryer bank 8 may have a radially outward facing hood 16.

It should be appreciated that any combination of inward and outward perforated plates and hoods may be used in the dryer banks 6.

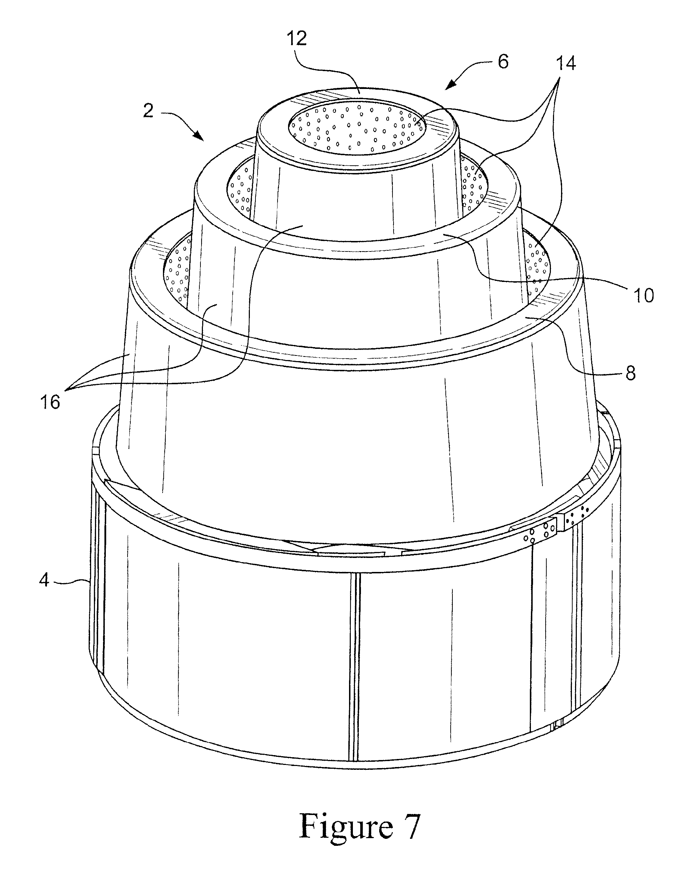

Referring to FIGURE 7, the dryer banks 6 may include dryer banks of different heights. For example, the intermediate dryer bank 10 may be higher than the outer dryer bank 8 and the inner dryer bank 12 may be higher than both the intermediate dryer bank 10 and the outer dryer bank 8.

It should be appreciated that any combination of dryer bank heights may be used in the dryer banks 6.

The closed loop dryer banks have a higher natural (i.e. resonance) frequency than current straight bank dryers, and provide increased stiffness and resistance to vibrations over current straight bank steam dryers. The closed looped dryer banks also provide lower stress levels and higher resistance to cracks due to fatigue. The closed loop dryer banks also reduce the parts count, e.g. by reducing the need for gussets and tie bars, and the number of welded joints, thus resulting in improved manufacturability and lower cost. The steam flow area provided by the closed loop dryer banks is equivalent to, or increased, compared to currently available steam dryers. The closed dryer banks may also be used as stand-alone replacements for current dryers, or may be provided as part of a new BWR/ESBWR plant.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. A steam dryer, comprising:
at least one steam dryer bank, each steam dryer bank comprising a hood, separating vanes, and a perforated plate connected to the hood to define a volume configured to receive a flow of steam, wherein each dryer bank comprises a closed loop.

2. A steam dryer according to claim 1, wherein the closed loop comprises a circular closed loop.

3. A steam dryer according to claim 1 or 2, wherein the perforated plate is provided on an inward portion of the closed loop.

4. A steam dryer according to claim 1 or 2, wherein the perforated plate is provided on an outward portion of the closed loop.

5. A steam dryer according to any of claims 1 to 4, wherein the at least one dryer bank comprises a plurality of segments.

6. A steam dryer according to claim 5, wherein the plurality of segments are connected.

7. A steam dryer according to claim 6, wherein the plurality of segments are connected such that steam can not flow between or amongst the segments.

8. A steam dryer according to any of the preceding claims, wherein the at least one steam dryer bank comprises a plurality of steam dryer banks.

9. A steam dryer according to claim 8, wherein the perforated plates of each steam dryer bank faces inward.

10. A steam dryer according to claim 8, wherein some of the perforated plates of the steam dryer banks face inward and the remaining perforated plates face outward.

11. A steam dryer bank according to any of claims 8 to 10, wherein the steam dryer banks have different heights.
